(19) **Europäisches Patentamt European Patent Office Office européen des brevets**

(11) **EP 1 839 910 B1**

(12) **FASCICULE DE BREVET EUROPEEN**

(45) Date de publication et mention de la délivrance du brevet:
**28.11.2012 Bulletin 2012/48**

(51) Int Cl.:
*G01G 19/08* (2006.01)     *G07C 5/08* (2006.01)

(21) Numéro de dépôt: **07102747.8**

(22) Date de dépôt: **20.02.2007**

(54) **Procédé de détermination d'un indicateur des contraintes supportées par un pneumatique de dumper**

Verfahren zur Bestimmung eines Beanspruchungsindikators eines Reifens eines Kipperfahrzeugs

Method of determining a load indicator supported by a dumper tyre

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.03.2006 FR 0602477**

(43) Date de publication de la demande:
**03.10.2007 Bulletin 2007/40**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeurs:
- **Contreras, Marcos**
  **765-0726, SANTIAGO (CL)**
- **Moreno, José Angel**
  **765-0726, SANTIAGO (CL)**

(74) Mandataire: **Le Cam, Stéphane Georges Elie Manufacture Francaise des Pneumatiques Michelin**
  **23, place des Carmes-Déchaux**
  **SGD/LG/PI - F35- Ladoux**
  **63040 Clermont-Ferrand Cedex 9 (FR)**

(56) Documents cités:
**EP-B1- 0 162 608     US-A- 6 044 313**

**Description**

L'invention concerne un procédé de détermination d'un indicateur des contraintes supportées par un pneumatique de dumper sur une période donnée. Un dumper est un engin de « Génie Civil », destiné à porter de lourdes charges, et circulant dans des carrières ou des mines.

Ces véhicules comprennent habituellement un train avant directeur comportant deux roues directrices et un train arrière, le plus souvent rigide, comportant quatre roues motrices réparties deux à deux de chaque côté. Un train est défini comme un ensemble des éléments permettant de relier la structure fixe du véhicule au sol.

Dans le cas de ces véhicules, notamment destinés à des usages dans des mines ou carrières pour le transport de charges, les difficultés d'accès et les exigences de rendement conduisent les fabricants de ces véhicules à augmenter leur capacité de charge. Il s'ensuit que les véhicules sont de plus en plus grands et donc eux-mêmes de plus en plus lourds et peuvent transporter une charge de plus en plus importante. Les masses actuelles des ces véhicules peuvent atteindre plusieurs centaines de tonnes et il en est de même pour la charge à transporter ; la masse globale peut atteindre jusqu'à 600 tonnes.

La capacité de charge du véhicule étant directement liée à celle des pneumatiques, la conception des pneumatiques doit être adaptée à ces évolutions pour fournir des pneumatiques capables de supporter les contraintes d'utilisation.

Les dimensions de ces pneumatiques sont donc importantes. En conséquence les dimensions des roues sont également importantes et la raideur des zones basses des pneumatiques nécessite que lesdites roues soient réalisées en plusieurs parties pour permettre le montage du pneumatique sur une jante. Le montage et le démontage des pneumatiques qui interviennent en cas de remplacement ou d'entretien nécessitent des manipulations longues et fastidieuses. Le nombre de pièces de serrage devant être manipulées lors de ces opérations peut être supérieur à 200, auquel s'associent des couples de serrage de ces pièces très importants. Le temps de ces opérations est en conséquence long et donc nuisible à la productivité recherchée dans le travail d'exploitation de ces mines.

La demande actuelle s'orientant toujours vers une hausse de la capacité de charge de ces engins, les différents paramètres énoncés précédemment conduisent les concepteurs de pneumatiques à optimiser lesdits pneumatiques notamment en tenant compte de l'utilisation de ceux-ci.

Le document EP-B-162 608 a déjà décrit un procédé indiquant le degré d'usure ou d'utilisation d'un pneumatique sur une période donnée en tenant compte du calcul du produit de la charge transportée par le véhicule par la distance parcourue par le véhicule durant ladite période, ledit produit étant corrigé par un facteur de correction intégrant des paramètres d'utilisation du véhicule.

Les inventeurs se sont ainsi donnés pour mission de répondre à la demande des utilisateurs qui souhaitent voir encore une augmentation de la capacité de charge des engins porteurs, notamment utilisés dans les mines, les performances des pneumatiques étant optimisées.

Ce but a été atteint selon l'invention par un procédé de détermination d'un indicateur des contraintes supportées par un pneumatique de dumper sur une période donnée selon lequel le produit de la charge transportée par le véhicule par la distance parcourue par ledit véhicule durant ladite période, est corrigé par un facteur de correction intégrant des paramètres d'utilisation du véhicule.

Par paramètres d'utilisation du véhicule, on entend au sens de l'invention des paramètres directement liés au véhicule, tels que sa direction, son inclinaison,... ainsi que des paramètres liés à son environnement tels que la température, la nature du sol, ... qui peuvent varier au cours de l'utilisation des pneumatiques sur le dumper.

Selon un mode de réalisation préféré de l'invention, le facteur de correction intègre des paramètres mesurés en temps réel durant ladite période tels la pente du terrain, le rayon des courbes, la surcharge, la largeur de la piste, l'enneigement, ....

La pente de la voie ou piste suivie par le véhicule va notamment modifier la répartition des charges par pneumatique. Un véhicule roulant dans le sens de la descente entraîne par exemple un report de charges sur le train avant alors que le même véhicule roulant dans le sens de la montée entraîne un report de charge sur le train arrière du véhicule.

De la même façon, un parcours sinueux entraîne des répartitions de charges variant entre la gauche et la droite du véhicule selon le sens des courbes empruntées par le véhicule. Des virages à droite ou à gauche modifient effectivement les répartitions de charge entre les pneumatiques.

Certains paramètres d'environnement qui peuvent être considérés comme les conditions d'utilisation du véhicule et donc des pneumatiques peuvent modifier les contraintes supportées par lesdits pneumatiques.

La température par exemple agit sur le comportement du pneumatique et donc sur ses réactions vis-à-vis des contraintes qui lui sont imposées. La nature du sol, qu'il s'agisse par exemple d'un terrain caillouteux ou bien d'un terrain sablonneux ou argileux, intervient directement sur les contraintes du pneumatique.

L'enneigement du terrain qui arrive dans certaines mines exploitées en altitude peut de même jouer un rôle sur les contraintes subies et ceci de différentes façons ; d'une part par la température associée, d'autre part par la modification éventuelle de la texture du sol et encore par l'éventuelle nécessité d'équiper les pneumatiques de chaînes pour renforcer la motricité, lesdites chaînes produisant des contraintes locales supplémentaires sur les pneumatiques.

La largeur des pistes peut encore être un paramètre d'utilisation à prendre en compte, notamment lorsque la piste est étroite et que deux véhicules sont amenés à se croiser. En effet dans un tel cas, il n'est pas rare que deux pneumatiques appartenant chacun à l'un des véhicules frottent l'un contre l'autre, ce qui conduit à des contraintes supplémentaires pour lesdits pneumatiques.

Il apparaît que pour certains de ces paramètres d'utilisation, il est possible de les définir une fois pour toute pour une exploitation donnée ; il s'agit par exemple de la nature du sol. Certains de ces paramètres pourront être définis sur des périodes relativement importantes ; il s'agit par exemple de la température, de l'enneigement, ...

Par contre, certains paramètres d'utilisation tels que la valeur de la pente suivie, la trajectoire (rayon de courbure d'un virage) nécessitent des mesures fréquentes si l'on veut obtenir un rendu le plus fidèle possible des contraintes supportées par chacun des pneumatiques d'un véhicule.

De telles exploitations minières possèdent habituellement un équipement permettant à l'exploitant de connaître à chaque instant la position des véhicules ainsi qu'un ensemble de mesures indiquant la plupart des paramètres d'utilisation telles que la charge transportée, la température, ...

Il est donc possible de profiter de l'acquisition de ces paramètres pour définir l'indicateur des contraintes supportées par un pneumatique de dumper sur une période donnée. Cet indicateur peut avantageusement ainsi être déterminé avec une fréquence satisfaisante, considérant les vitesses de variations des différents paramètres d'utilisation que l'on souhaite prendre en compte. En effet, ces acquisitions sont faites habituellement à des intervalles inférieurs à une minute et pouvant être de l'ordre d'une demi minute.

La prise en compte des différents paramètres dans le facteur de correction est avantageusement associée à des facteurs de pondération pour chacun de ces paramètres. En effet, l'influence des différents paramètres sur les contraintes supportées par les pneumatiques du véhicule peut être d'une importance plus ou moins grande selon le pneumatique considéré durant la période considérée.

La détermination de ces facteurs de pondération est avantageusement définie de manière empirique ou bien par modélisation pour prendre en compte les conditions spécifiques du lieu de circulation du véhicule et de ses conditions de trajet.

Les inventeurs ont su mettre en évidence que la spécificité des dumpers et plus particulièrement de leur utilisation nécessite une connaissance très précise desdites conditions d'utilisation lorsque l'on souhaite définir les contraintes supportées par les pneumatiques en vue de l'optimisation desdits pneumatiques. Une connaissance précise signifie une connaissance à tout moment de l'utilisation, les variations des conditions d'utilisation ou plus précisément la variation des paramètres évoqués précédemment conduisant à des variations non négligeables sur les contraintes supportées par les pneumatiques.

Selon un mode de réalisation préféré de l'invention, le procédé selon l'invention tel qu'il vient d'être décrit est mis en oeuvre pour déterminer l'indicateur des contraintes supportées par un pneumatique de dumper circulant sur les pistes d'une mine.

Une réalisation préférée de l'invention prévoit que l'indicateur des contraintes supportées par un pneumatique de dumper est déterminé pour une période inférieure à une minute et de préférence pour une période inférieure à 40 secondes.

Selon une variante avantageuse de l'invention, la détermination du facteur de correction est établie par un calculateur. En effet, la nécessité de prendre en compte les mesures de paramètres effectuées sur des périodes très courtes est facilitée par l'utilisation d'un calculateur pouvant être associé à un logiciel programmé pour tenir compte des facteurs de pondération correspondant à chacun des paramètres et prédéfinis pour la mine sur laquelle circule le dumper et pour chacun des pneumatiques d'un véhicule en fonction des trajectoires qu'il suit.

En d'autres termes, l'invention propose ainsi un procédé de détermination d'un indicateur des contraintes supportées par un pneumatique de dumper, circulant sur les pistes d'une mine, sur une période donnée, le dumper et/ou un dispositif de la mine comportant des moyens de mesures en temps réel de paramètres physiques, lesdits moyens étant reliés à des éléments de mémoire et à un calculateur, ledit procédé permettant d'établir, à l'aide dudit calculateur, un indicateur des contraintes supportées par un pneumatique du dumper durant ladite période en effectuant le produit de la charge transportée par le véhicule telle que mesurée par un moyen de mesure de ladite charge transportée par la distance parcourue par ledit dumper telle que mesurée par un moyen de mesure de ladite distance, pour une période donnée, ledit produit étant corrigé par un facteur de correction intégrant au moins un paramètre physique de ladite mine et/ou des conditions d'utilisation du dumper, tel que mesuré par un moyen de mesure dudit paramètre physique.

L'invention propose ainsi également une utilisation de paramètres mesurés sur un dumper lors de sa circulation et dans son environnement pour déterminer un indicateur des contraintes supportées par un pneumatique dudit dumper.

Par ailleurs, les études ont montré que l'utilisation et l'entretien de pneumatiques de dumper sont très spécifiques et doivent être réalisées avec beaucoup d'attention par des spécialistes. En effet, l'optimisation de la durée de vie de ce type de pneumatiques repose sur une utilisation précise tant en ce qui concerne la surveillance de pression, les permutations, les changements de sens, les réparations, etc... Il est usuellement reconnu que le meilleur spécialiste du pneumatique est son concepteur et donc le manufacturier. Il est donc en conséquence souhaitable que le fabricant du pneumatique ait la possibilité de suivre le pneumatique, son usage et ses conditions d'usage. Une solution possible est que le manufacturier reste propriétaire du pneumatique et que celui-ci soit loué à l'utilisateur. Dans une telle situation, le pneumatique ne fait donc plus l'objet d'une vente mais devient un produit de location pour lequel il reste à déterminer le prix à payer qui peut alors avantageusement ne pas être un coût standard mais un coût fonction de l'utilisation.

Les inventeurs proposent ainsi de baser ce coût de location d'un pneumatique de dumper sur une utilisation réelle du pneumatique et notamment sur la somme des indicateurs des contraintes supportées par ledit pneumatique pour des périodes données.

L'invention propose donc ainsi une utilisation de la somme des indicateurs des contraintes supportées par un pneumatique de dumper sur des périodes données pour déterminer le montant à payer pour une durée d'utilisation correspondant à la somme desdites périodes.

Selon un mode de réalisation avantageux de l'invention, le montant à payer est également déterminé à partir d'un coefficient monétaire fixé au préalable par rapport au prix auquel serait vendu le pneumatique.

Avantageusement encore, cette détermination du coût de la location est prévue pour se voir substituer une valeur résiduelle déterminée en fonction de ce qui a déjà été payé ; une telle valeur résiduelle est appliquée en cas d'accidents ou de dommages irréparables causés au pneumatique du fait des conditions et du lieu d'utilisation.

Il s'avère qu'une telle détermination du coût des pneumatiques d'un dumper contribue d'une part au bon fonctionnement desdits pneumatiques du fait des conditions d'utilisation optimales et d'autre part conduit indirectement à une augmentation de la durée de vie du pneumatique. En effet, ce principe de détermination du coût et donc le principe de la location des pneumatiques est lié au fait que le fabricant du pneumatique reste propriétaire de celui-ci et donc favorise, du fait du suivi des pneumatiques par le propriétaire, une utilisation dans les conditions les plus favorables possibles notamment en termes de pression de gonflage, de positionnement du pneumatique sur le véhicule, etc... Il s'ensuit que les pneumatiques roulant dans de meilleures conditions vont voir leur durée de vie moyenne augmentée, ce qui se traduit par une productivité du pneumatique améliorée.

D'autres détails et caractéristiques avantageux de l'invention ressortiront ci-après de la description d'un exemple de réalisation de l'invention.

L'exemple décrit ci-après a été fait sur un ensemble de dumpers, chacun équipé de six pneumatiques de type 40.00R57, circulant sur les pistes d'une mine à ciel ouvert à 3100 mètres d'altitude.

Les différents paramètres d'utilisation pris en compte sont les suivants :

• Concernant les paramètres d'environnement, ont été pris en compte la nature du sol, la température et l'enneigement.

• Concernant les paramètres d'utilisation, ont été pris en compte la trajectoire suivi par les dumper sur les pistes et plus précisément les pentes et courbes desdites pistes ainsi que leurs largeurs ainsi que les surcharges éventuellement transportées.

Les facteurs de pondération associés à chacun de ces paramètres sont définis initialement en fonction de la mine, du véhicule et du pneumatique considéré sur le véhicule. En effet, les contraintes supportées par chacun des six pneumatiques du véhicule ne sont pas nécessairement équivalentes pour un paramètre donné ; par exemple le paramètre correspondant à la largeur des pistes n'aura aucune influence sur des pneumatiques axialement à l'intérieur sur un essieu, c'est-à-dire des pneumatiques qui ne présentent pas de flanc exposé à d'éventuels frottements contre un autre véhicule lors d'un passage étroit. De la même façon le passage du véhicule dumper dans une courbe ou bien sur des passages en pente conduit à des transferts de charge, les contraintes supportées par certains pneumatiques augmentant alors que pour d'autres pneumatiques elles diminuent.

L'indicateur « Ct » des contraintes supportées par un pneumatique de dumper pour une période « t » donnée peut s'exprimer de la façon suivante :

$$Ct = Fc \times (P \times D),$$

« Fc » étant le facteur de correction pour ladite période « t », « P » étant la charge transportée par le Dumper et « D » la distance parcourue par le dumper durant cette période « t ».

Le facteur de correction « Fc » est encore comme expliqué précédemment déterminé à partir de la somme de valeurs « fi » correspondant aux différents paramètres d'utilisation, chacune des valeurs « fi » étant multipliée par un facteur de pondération « ki ».

Le facteur de correction peut ainsi s'exprimer de la façon suivante :

$$Fc = 1 + \Sigma \, (ki \times fi).$$

Chacune des valeur « fi », associée à l'un des paramètres d'utilisation pris en compte est définie au préalable et peut varier en fonction de l'état du paramètre ; le facteur de pondération auquel elle est associée va lui notamment dépendre du pneumatique considéré, l'influence d'un paramètre variant éventuellement d'un pneumatique à l'autre.

La mesure des différents paramètres d'utilisation traduits en valeurs « fi » va ainsi permettre de déterminer pour chacune des périodes considérées un indicateur des contraintes supportées par chacun des pneumatiques.

Le recueil de ces informations peut apporter d'autres avantages. Par exemple, il est possible d'apporter des conseils à l'utilisateur, c'est-à-dire au conducteur du véhicule, notamment en lui faisant corriger sa conduite en certaines circonstances en vue de diminuer les contraintes supportées par certains pneumatiques sur une période donnée. Par exemple, préconiser un ralentissement sur une zone dans lequel cela ne semble pas nécessaire peut permettre de réduire un freinage ultérieur et de ce fait le report de charge créé sur les pneumatiques du train avant du véhicule. La connaissance des contraintes supportées par les différents pneumatiques durant les différentes périodes de leur trajet peut permettre de conseiller de tels choix de conduite en vu éventuellement d'une meilleure répartition dans le temps des contraintes supportées par un pneumatique. En effet, il peut être souhaitable d'augmenter les contraintes supportées par un pneumatique sur une première période pour éviter une valeur desdites contraintes très importante sur une période ultérieure. Une telle correction de la conduite peut ainsi permettre d'éviter de faire supporter aux pneumatiques des valeurs de contraintes trop importantes conduisant à d'éventuels dommages du pneumatique.

Comme déjà évoqué précédemment, les informations sur les contraintes supportées sur une période par chacun des pneumatiques peuvent encore permettre de déterminer le coût à facturer pour la location d'un pneumatique.

Conformément aux indications précédentes, le loyer « Lt » à payer pour la location d'un pneumatique de dumper pour une période donnée peut se calculer selon le mode suivant :

$$Lt = K \times Ct,$$

K étant un coefficient monétaire préétabli en fonction notamment des coûts de production et des coûts des matières premières.

En cas d'incident survenant du fait des conditions d'utilisation et conduisant à un endommagement irréparable du pneumatique, le prix à payer pour la location dudit pneumatique se voit substituer un prix résiduel à payer fonction de ce qui a déjà été payé et de l'estimation qui peut être faite des loyers non encore perçus du fait de cette dégradation. Cette estimation est basée sur l'expérience déjà acquise sur ces pneumatiques dans les mêmes conditions d'utilisation.

Ce mode de facturation des pneumatiques sous la forme de loyer présente comme déjà expliqué certains avantages du fait que le pneumatique reste la propriété du manufacturier. En effet, la surveillance et le meilleur respect des consignes d'utilisation desdits pneumatiques va permettre d'augmenter sensiblement leur durée d'utilisation.

Le gain peut encore être plus intéressant si l'on considère que le nombre des périodes d'immobilisation des dumpers pour changement de pneumatiques va de ce fait diminuer.

En outre, il s'avère que pour l'utilisateur le loyer n'est à payer que lorsque le dumper est opérationnel puisque d'une part, une distance doit être parcourue et que d'autre part, le dumper doit être chargé pour que les contraintes supportées soient non nulles et donc qu'un coût à payer soit calculé.

## Revendications

1. Procédé de détermination d'un indicateur des contraintes supportées par un pneumatique de dumper, circulant sur les pistes d'une mine, sur une période donnée selon lequel le produit de la charge transportée par le véhicule par la distance parcourue par ledit véhicule durant ladite période est corrigé par un facteur de correction intégrant au moins un paramètre physique de ladite mine et/ou des conditions d'utilisation du dumper.

2. Procédé selon la revendication 1, le facteur de correction intégrant des paramètres mesurés en temps réel durant ladite période tels la pente du terrain, le rayon des courbes, la surcharge, la largeur de la piste, l'enneigement, ....

3. Procédé selon la revendication 1 ou 2, le dumper et/ou un dispositif de la mine comportant des moyens de mesures en temps réel de paramètres physiques, lesdits moyens étant reliés à des éléments de mémoire et à un calculateur ledit procédé permettant d'établir, à l'aide dudit calculateur, un indicateur des contraintes supportées par un pneumatique du dumper durant ladite période en effectuant le produit de la charge transportée par le véhicule telle que mesurée par un moyen de mesure de la charge transportée par la distance parcourue par ledit dumper telle que mesurée par un moyen de mesure de la distance, pour une période donnée, ledit produit étant corrigé par un facteur de correction intégrant au moins un paramètre physique de ladite mine et/ou des conditions d'utilisation du dumper, tel que mesuré par un moyen de mesure dudit paramètre physique.

4. Mise en oeuvre du procédé selon la revendication 1 à 3, pour déterminer l'indicateur des contraintes supportées par un pneumatique de dumper circulant sur les pistes d'une mine.

5. Mise en oeuvre du procédé selon la revendication précédente, dans laquelle l'indicateur des contraintes supportées par un pneumatique de dumper est déterminé pour une période inférieure à une minute et de préférence pour une période inférieure à 30 secondes.

6. Mise en oeuvre du procédé selon la revendication précédente, dans laquelle la détermination du facteur de correction est établie par un calculateur.

7. Utilisation d'une somme d'indicateurs de contraintes supportées par un pneumatique de dumper déterminés sur un ensemble de périodes données selon l'une des revendications 1, à 3 pour déterminer le montant à payer pour une durée d'utilisation correspondant à la somme desdites périodes.

8. Utilisation selon la revendication 7, selon laquelle le montant à payer est également déterminé à partir d'un coefficient monétaire fixé au préalable.

9. Utilisation selon l'une des revendications 7 ou 8, en cas de dommages irréparables du pneumatique, selon laquelle le montant à payer se voit substituer une valeur résiduelle.

10. Utilisation selon la revendication 9, selon laquelle la valeur résiduelle est fixée par le coût de production et le coût des matières premières.

**Claims**

1. A process for determining an indicator of the stresses to which a dumper tyre is subjected, travelling on the tracks of a mine, over a given period in which the product of the load transported by the vehicle and the distance travelled by said vehicle during said period is corrected by a correction factor integrating at least one physical parameter of said mine and/or conditions of use of the dumper.

2. A process according to Claim 1, the correction factor integrating parameters measured in real time during said period such as the slope of the terrain, the radius of the curves, the overload, the width of the track, the snow cover, etc.

3. A process according to Claim 1 or 2, the dumper and/or a device of the mine comprising means for measuring physical parameters in real time, said means being connected to storage elements and to a computer, said process making it possible to establish, using said computer, an indicator of the stresses to which a tyre of the dumper is subjected during said period by calculating the product of the load transported by the vehicle as measured by a means for measuring the transported load and the distance travelled by said dumper as measured by a means for measuring the distance, for a given period, said product being corrected by a correction factor integrating at least one physical parameter of said mine and/or conditions of use of the dumper, as measured by a means for measuring said physical parameter.

4. The performance of the process according to Claim 1 to 3 to determine the indicator of the stresses to which a dumper tyre running on the tracks of a mine is subjected.

5. The performance of the process according to the preceding claim, in which the indicator of the stresses to which a dumper tyre is subjected is determined for a period of less than one minute and preferably for a period of less than 30 seconds.

6. The performance of the process according to the preceding claim, in which the correction factor is determined by a computer.

7. The use of a total of indicators of stresses to which a dumper tyre is subjected determined over a set of given periods according to one of Claims 1 to 3 to determine the amount to be paid for a duration of use corresponding to the total of said periods.

8. The use according to Claim 7, according to which the amount to be paid is also determined from a monetary coefficient set beforehand.

9. The use according to one of Claims 7 or 8, in the event of irreparable damage to the tyre, according to which the amount to be paid is substituted by a residual value.

10. The use according to Claim 9, according to which the residual value is set by the production cost and the cost of the raw materials.

**Patentansprüche**

1. Verfahren zur Bestimmung eines Indikators der von einem Kipper-Luftreifen, der auf den Wegen einer Mine fährt, über einen gegebenen Zeitraum erfahrenen Beanspruchungen, gemäß dem das Produkt aus der vom Fahrzeug transportierten Last und der von dem Fahrzeug während des Zeitraums durchfahrenen Strecke durch einen Korrekturfaktor korrigiert wird, der mindestens einen physikalischen Parameter der Mine und/oder der Nutzungsbedingungen des Kippers umfasst.

2. Verfahren nach Anspruch 1, wobei der Korrekturfaktor während des Zeitraums in Echtzeit gemessene Parameter umfasst, wie die Neigung des Geländes, der Radius der Kurven, die Überlast, die Breite des Wegs, die Schneehöhe, ....

3. Verfahren nach Anspruch 1 oder 2, wobei der Kipper und/oder eine Vorrichtung der Mine Einrichtungen zur Echtzeitmessung von physikalischen Parametern aufweisen, wobei die Einrichtungen mit Speicherelementen und mit einem Rechner verbunden sind, wobei das Verfahren es mit Hilfe des Rechners erlaubt, einen Indikator der von einem Kipper-Luftreifen während des Zeitraums erfahrenen Beanspruchungen zu ermitteln, indem das Produkt aus der vom Fahrzeug transportierten Last, wie sie von einer Messeinrichtung der transportierten Last gemessen wird, und der vom Kipper zurückgelegten Strecke, wie sie von einer Einrichtung zur Messung der Strecke für einen gegebenen Zeitraum gemessen wird, ermittelt wird, wobei das Produkt durch einen Korrekturfaktor korrigiert wird, der mindestens einen physikalischen Parameter der Mine und/oder der Nutzungsbedingungen des Kippers umfasst, wie er von einer Messeinrichtung des physikalischen Parameters gemessen wird.

4. Durchführung des Verfahrens nach Anspruch 1 bis 3 zur Bestimmung des Indikators der von einem auf den Wegen einer Mine fahrenden Kipper-Luftreifen erfahrenen Beanspruchungen.

5. Durchführung des Verfahrens nach dem vorhergehenden Anspruch, bei der der Indikator der von einem Kipper-Luftreifen erfahrenen Beanspruchungen für einen Zeitraum von weniger als einer Minute und vorzugsweise für einen Zeitraum von weniger als 30 Sekunden bestimmt wird.

6. Durchführung des Verfahrens nach dem vorhergehenden Anspruch, bei der die Bestimmung des Korrekturfaktors durch einen Rechner ermittelt wird.

7. Verwendung einer Summe von Indikatoren von Beanspruchungen, die von einem Kipper-Luftreifen erfahren werden, die über eine Einheit von gegebenen Zeiträumen nach einem der Ansprüche 1 bis 3 bestimmt werden, um den für eine Nutzdauer entsprechend der Summe der Zeiträume zu zahlenden Betrag zu bestimmen.

8. Verwendung nach Anspruch 7, gemäß der der zu zahlende Betrag ebenfalls ausgehend von einem vorab festgelegten monetären Koeffizient bestimmt wird.

9. Verwendung nach einem der Ansprüche 7 oder 8, im Fall von irreparablen Beschädigungen des Luftreifens, gemäß der dem zu zahlenden Betrag einen Restwert ersetzt.

10. Verwendung nach Anspruch 9, gemäß der der Restwert durch die Produktionskosten und die Kosten der Rohstoffe festgelegt wird.

**RÉFÉRENCES CITÉES DANS LA DESCRIPTION**

**Documents brevets cités dans la description**

- EP 162608 B